# EUROPEAN PATENT APPLICATION

(11) **EP 3 943 818 A1**
(43) Date of publication of application: **26.01.2022**
(21) Application number: 21185251.2
(22) Date of filing: 13.07.2021
(51) Int. Cl.: F24C 14/00

(54) **APPARATUS FOR COOKING FOODS AND A METHOD FOR OPERATING THE APPARATUS**

(30) Priority: 21.07.2020 IT 202000017674
(71) Applicant: Angelo Po Grandi Cucine - Societa' per Azioni, 41012 Carpi (MO) (IT)
(72) Inventor: SEGATO, Fabio, 41058 Vignola (MO) (IT); GEMELLI, Luca, 46010 S. Silvestro di Curtatone (MN) (IT)
(74) Representative: Crugnola, Pietro

(57) **Abstract**

An apparatus (1) for cooking food comprises an oven (2), comprising a cooking chamber in which the food can be cooked by dry hot air, steam or hot air and steam together, a support frame (4) to which said oven (2) is fixed, a collecting tank (5) designed to collect the liquid produced in said cooking chamber during the cooking of food or delivered to said cooking chamber during a washing procedure of said oven (2), said collecting tank (5) being associated with said support frame (4) and being provided with an inlet opening (8) that can be connected to a drain (9) of said cooking chamber, said collecting tank (5) being provided with level sensor means (10; 10a, 10b, 10c) configured for detecting a plurality of levels reached by said liquid in said collecting tank (5).

A method for managing an apparatus (1) for cooking food, including an oven (2) for cooking said foods, fixed to a support frame (4) with which a collecting tank (5) is associated that is designed to collect the liquid produced in said oven (2) during the cooking of food or delivered to said oven (2) during a washing procedure of said oven (2), comprises detecting a plurality of different levels reached by said liquid in said collecting tank (5) and communicating the reaching of said levels to a command and control device of the oven (2), one of said levels being a preset permissible maximum level that said liquid can reach in said collecting tank (5).

## Description

### SCOPE OF INVENTION

The invention relates to an apparatus for cooking food, comprising a convection and steam combi oven, or mixed oven, and a method for managing said apparatus.

Combi ovens can cook food inside a cooking chamber by using dry hot air, steam or a predefined combination of hot air and steam.

Combi ovens are provided with a system, for instance a boiler, which generates steam by using drinking water, and with a system of pipes which connect the cooking chamber to the outside environment, and are used to discharge the steam accumulated in the cooking chamber during food cooking. These pipes discharge steam to the outside environment, and may be provided with a system adapted to condense at least part of the steam as well as to reduce emissions to the outside, the steam condensation usually being obtained through cold water injection.

Furthermore, combi ovens of modern design are provided with a system for automatically washing the cooking chamber, which uses detergent substances mixed with drinking water. The flow of water and detergent is sprayed on all inner surfaces of the cooking chamber to remove dirt and food debris. Then, drinking water is used to rinse, once again automatically, the cooking chamber, and to remove detergent product debris prior to subsequent cooking.

Combi ovens for professional use are provided with a drain usually located on the bottom part of the oven, through which the liquids flowing out of the cooking chamber, and more generally out of the oven, are discharged

During cooking, these liquids consist of condensate formed on the walls of the cooking chamber in steam cooking, in addition to any water used to cool down and condense the steam flowing out of the oven, whereas in the process of washing the cooking chamber of the oven, they consist of a mixture of water and detergent and/or of rinsing water. Normally, the oven drain is connected to the sewers of the place where the oven is installed, such that all liquids flowing out of the cooking chamber are conveyed therein.

Thus, in order to install a combi oven, it is required to provide not only a connection to an energy source, such as, for example, gas and/or electricity, and to the drinking water network, but also a connection to the sewers.

If the place where the oven is installed is not already provided with any connections both to an energy source and to the sewers, it must be ensured that all these connections be provided, this bearing additional costs which sometimes may be of an amount equal to, or even greater than, the oven's purchase price. In particular, in most cases it is the connection to the sewage system that bears the higher costs.

### STATE OF THE ART

In order to limit the installation costs of a combi oven, when the place where the oven is to be installed is not already provided with any connections to the drinking water network and to the sewers, systems have been proposed that allow the installation and use of combi ovens even without the need for connections to the drinking water network and/or to the sewage system.

Some of these systems have been devised to allow a "movable" or temporary installation of the oven, for instance when the oven should be used for banquets or temporary events in places different from common professional kitchens.

In such a case, the combi oven is provided with two tanks: one for drinking water supply for steam generation, and the other for wastewater collection.

These tanks and their related accessory items, such as, for example, water pressurizing pumps, valves, sensors, etc., are usually located under the oven, and incorporated within a support structure of the oven itself. For obvious reasons of space, these tanks normally have limited capacity, sometimes not sufficient to allow the carrying out of an automatic washing, which usually requires a considerable amount of water of the order of some tens of liters of water. This important limitation may be acceptable for a temporary use of the apparatus, but not for a prolonged use thereof in the same installation.

DE9101222U describes an example of this kind of systems.

Other systems provide a fixed installation, namely for a continuous use of the oven in the same place, but do not require any connection to the sewers of the place, this item usually representing the highest costs in the arrangement of connections to utilities, as mentioned above.

Thus, these other systems provide fixed connections to electricity and for supplying water to the oven, whereas they are provided with a tank for the waste liquids of the oven.

The tank is located under the oven, usually inside an oven support frame, and is connected to the oven drain to collect the liquids flowing out thereof during use.

When the tank is full, it is removed from its working position and carried to a place where the tank can be emptied, such as at a floor drain, the tank being emptied through either an opening or a valve.

The tank may either be provided with wheels or be installed on a wheeled frame, so as to make its transport or handling easier.

When compared to the systems described above, the systems of this kind offer the advantage of having a discharge tank of greater capacity, capable of containing an amount of liquid necessary for at least one washing cycle of the oven, and of guaranteeing a longer working range of the oven between an emptying event and a subsequent emptying event.

DE 10 2010 017177describes a system of this kind.

The system comprises a movable tank incorporated within the support structure of the oven, which is also provided with a closing door.

The system further provides an intermediate, not removable, tank, located between the oven drain and the movable tank, and connected to the latter by an electric valve controlled by the oven electronic control board.

The system is also provided with sensors monitoring the correct positioning of the movable tank and the closing of the closing door, as well as the fill level of the movable tank.

Based on the signals coming from the sensors, the oven electronic control board actuates the valve which connects the intermediate tank with the movable tank, e.g., by closing it if the closing door in the frame is opened, if the movable tank is removed, or if the level sensor signals that the movable tank is full.

The electronic control board and the sensors are intended for automatically monitoring the correct operation of the system, thus avoiding, for example, that liquid overflows from the movable tank once the maximum fill level is exceeded.

The system also provides that upon reaching the maximum level of the movable tank, this circumstance be signaled by the control panel of the oven (for example through the turning on of an indicator light), and that the ongoing process may be completed by using the storage capacity of the intermediate tank. By contrast, when the tank is full, no new cooking process can be activated.

The system described in DE 10 2010 017177 has some drawbacks.

The first drawback is the complexity of the system, and thus its high costs. If the costs of the system become too high and comparable to the construction costs of a fixed drain for permanent connection to the oven drain, then the very reason d'être of these system ceases, which are precisely designed to reduce the oven installation costs.

Another drawback is related to the high number of electrically controlled sensors and organs, which inevitably results in an increased probability of failure, this being a cause of downtime of the oven and of economic damage for the user. Indeed, it is worth noting that improper work on any of the sensors installed in the system results in the impossibility to use the oven once the ongoing process is completed.

Furthermore, in DE 10 2010 017177 it is affirmed that even if the movable tank gets completely full, the ongoing process may be duly finished.

However, it is known that the amount of liquid flowing out of the oven drain varies remarkably from a washing process to a cooking process, and, in the latter case, it may vary significantly also depending on the type of cooking. Moreover, it is obvious that the total amount of condensate discharged by the oven during cooking depends on the duration of the cooking time.

Cooking processes may be very long, such as, for example, low-temperature cooking processes, or some methods of using combi ovens which require the oven to be used continuously even for some hours.

DE 10 2010 017177 does not explain how to guarantee the security of the system in these cases, and is silent about the size of the intermediate tank which is intended to collect waste liquids when the movable tank is full.

Moreover, no sensor is provided for monitoring the filling of the intermediate tank under these conditions, and thus there is a good chance that the ongoing cooking or washing process results in the filling of both the intermediate tank and the upstream system beyond the admitted threshold, this condition not being detected by the apparatus.

One last drawback relates to the hydraulic connection between the discharge tank and the overlying circuit.

Indeed, an element is provided that is connected to the pipe which comes from the intermediate tank, and which is automatically centered, through a guide arrangement, within an opening of the movable tank when the latter is positioned in its seat. When the tank is full and is to be moved for emptying, however, the hole provided in the tank, used for filling, remains open, and some liquid may flow out thereof due to the movement of the tank itself. This spilled liquid may constitute a risk to the personnel, both because the floor gets slippery, and because of the possible presence of caustic products, e.g., sodium hydroxide, usually contained in detergents used for the automatic cleaning of professional ovens.

WO2013/190368 describes a system comprising a discharge tank movable on wheels, and a catch basin placed between the oven drain and the movable tank. The basin may rotate between two positions: one in which the movable tank is in its working position, and another in which the movable tank has been removed. As in the other patents mentioned, the system is incorporated within a support structure of the oven.

The object of this solution is to make sure that the flow discharged from the oven be conveyed into the movable tank when this is in place, and that the flow is collected in the intermediate catch basin when the movable tank has been removed from its seat, for example, for emptying. Thus, the intermediate basin fulfills the same functions as the intermediate tank in patent DE102010017177, but with a simpler, cheaper solution.

The system described in WO2013/190368 certainly offers the advantage of being simple and cheap; yet, it has some drawbacks.

The first drawback is that according to WO2013/190368, when the movable tank is removed from its position the oven continues to work, and the liquid flowing out of the discharge is collected in the catch basin. Yet, the fill level of the basin is not monitored at all. As a result, if it takes long to the operator to put the movable tank back in place, the basin may get full, and the liquid may overflow inside the support structure of the oven and/or on the floor.

Another drawback relates to the catch basin, which is an open vessel, such that all vapors emitted by the waste liquid flowing thereinto (usually, the waste liquid from the oven is hot, with temperatures that may even reach 70-80°C) expand within the structure and form condensate and dripping on the walls. Furthermore, the organic residues contained in the waste liquids passing through the basin may decompose over time, and generate bad smell.

Finally, according to the preferred embodiment described in the patent, it is provided that the basin rotates around an axis. In this case, it may be expected that when the movable tank is put back in place and the basin rotates to empty the liquid inside the tank, this liquid may generate a wave, which may overflow the edges of the basin, especially if this operation is carried out in a rough manner.

### DESCRIPTION OF THE INVENTION

The aim of the present invention is to provide an apparatus for cooking food, comprising a combi oven for cooking food, provided with a system for the collection of waste liquid of the oven that allows the apparatus to be installed in a fixed manner, without the need for connecting to the sewers. The apparatus according to the invention only requiring a fixed connection to an energy source (electricity and/or gas) and a fixed connection to the drinking water network, for steam generation and for the automatic cleaning system of the oven.

The collection system for the waste liquid of the oven provides a movable tank located under the oven and incorporated within a support frame of the oven itself. When the movable tank is in place, it is connected to the oven drain through a pipe, such that the waste liquid drains thereinto.

According to the invention, it is provided that the waste liquid collecting tank is provided with a system for detecting the level of liquid in the tank, adapted to detect a plurality of discrete levels of liquid in the tank, or to continuously detect the liquid level in the tank, so as to check, during the whole functioning of the oven, the level reached by the liquid in the tank, and to transmit these data to the oven electronic control board, such that operation is guaranteed under all conditions, while optimizing in the same time the use of the apparatus by taking full advantage of the tank capacity, and reducing the frequency of the tank emptying.

The possibility of continuously monitoring the level of liquid in the collecting tank allows to simplify the apparatus structure by eliminating the need for an intermediate tank or vessel for the collection of the waste liquid discharged from the oven when the collecting tank is full. In addition, a continuous monitoring of the liquid level in the collecting tank allows to overcome the aforementioned drawbacks of prior art combi ovens.

### BRIEF DESCRIPTION OF THE FIGURES

Additional features and advantages of the invention will be clear from the following description thereof, made for illustrative, not limitative purposes, with reference to the enclosed drawings, in which:

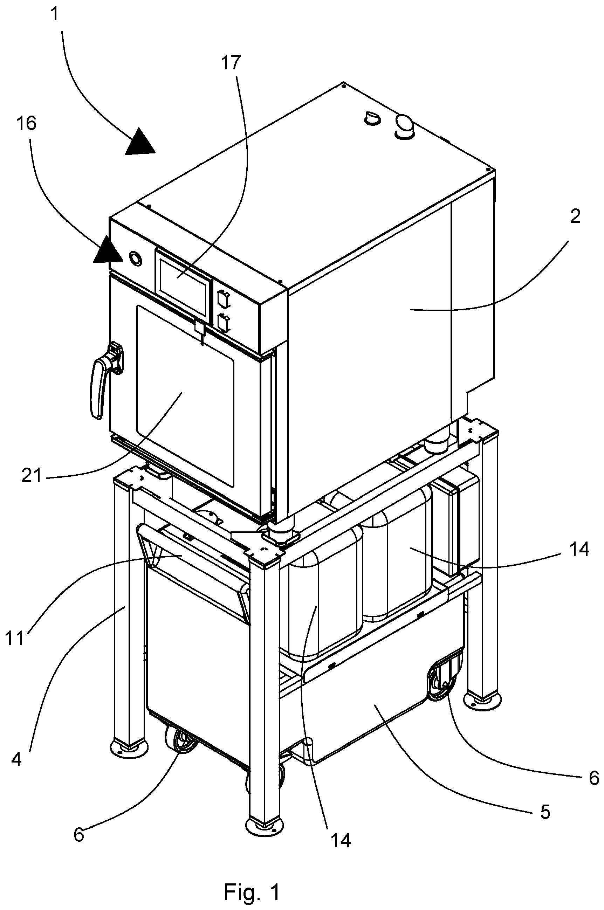

Figure 1 shows a combi oven according to the invention, in an isometric view;
Figure 2 shows the oven in Figure 1, in an elevation view:
Figure 3 shows an enlarged detail of Figure 2;
Figure 4 shows a collecting tank of the oven according to the invention, in an isometric view;
Figure 5 shows the collecting tank in Figure 4, in a sectioned elevation view.

### DETAILED DESCRIPTION OF THE INVENTION

Making reference to the Figures, an inventive apparatus for cooking food is indicated by the reference number 1, and comprises a combi oven 2, that is an oven suitable for cooking food using dry hot air or steam, or hot air and steam.

Within the oven 2 is defined a cooking chamber 3 that may be accessed through a door 21, the food being cooked inside the same.

The oven 2 is mounted on a support frame 4 which is associated with a collecting tank 5 designed to collect the liquids discharged from the oven 2 during the cooking of food, or during a washing and rinsing procedure of the oven.

The collecting tank 5 is movable, namely it may be extracted from, and inserted into, the support frame 4.

The collecting tank 5 may be provided with wheels 6, such as adjustable wheels, to allow movement thereof, and with a handle 11 by means of which an operator can move the collecting tank 5.

Alternatively, the collecting tank 5 may be fixed onto a movable wheeled frame.

When inserted into the support frame 4, the collecting tank 5 may be connected to a drain 9 of the oven 2 by means of a pipe 7 ending with a connecting element 7a, which is configured for being inserted into an inlet opening 8 obtained in the collecting tank 5, when the latter is inserted into the support frame 4, guided by a guide arrangement.

The inlet opening 8 may be provided with an automatic closing system, such as, for example, a valve 8a, e.g., a swing pattern valve or another type of check valve, normally found in closed position, and which is opened by the mechanical action of the connecting element 7a, when the connecting element 7a enters the inlet opening 8.

Thereby, when the collecting tank 5 is moved for emptying, the inlet opening 8 is closed, and there is no risk of spillage of the liquid contained in the collecting tank 5.

Furthermore, the inlet opening 8 may be provided with a seal gasket configured for making a substantially hermetic seal between the connecting element 7a and the inlet opening 8, which prevents unpleasant vapors and odors from exiting from the collecting tank 5 and the pipe 7 during the functioning of the oven 2.

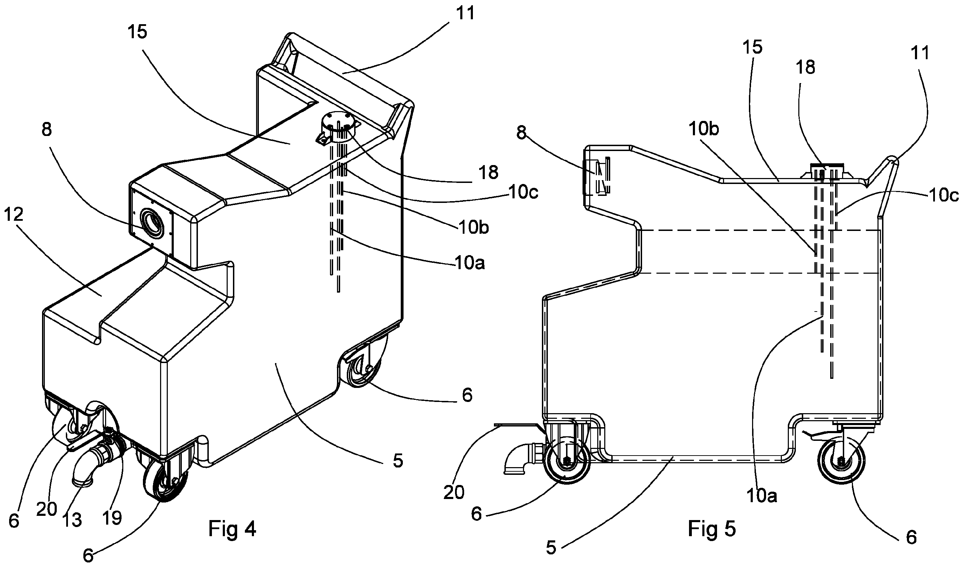

The collecting tank 5 is provided with a discharge conduit 13, provided with an opening and closing valve 19, seen in Figure 4, which may be driven manually by means of a control lever 20.

The collecting tank 5 is provided with level sensor means 10, 10a, 10b, 10c fixed to a support element 18 mounted on an upper face 15 of the collecting tank 5.

In an embodiment of the invention, there are provided three sensor levels 10a, 10b, 10c (Figures 4 and 5), each of them being configured for detecting a different level reached by the liquid inside the collecting tank. For example, sensor 10a can detect a first level reached by the liquid, sensor 10b can detect a second level, greater than the first level, reached by the liquid, and sensor 10c can detect a third level, greater than the second level, reached by the liquid.

The number of sensors may be different from three, and yet remain within the scope of the present invention.

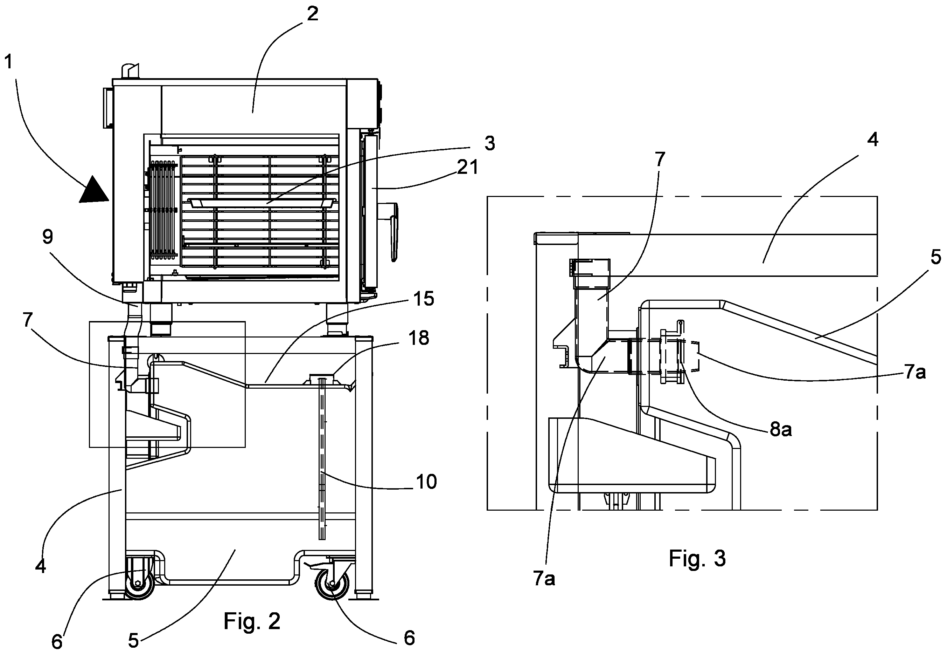

Alternatively, the collecting tank 5 may be provided with one single lever sensor 10 (Figure 2), configured for continuously detecting the level reached by the liquid in the collecting tank 5.

The level sensor means 10, 10a, 10b, 10c are operationally connected to a command and control device of the oven 2, not shown, such as an electronic control board.

The level sensor means 10, 10a, 10b, 10c are connected to the electronic control board through a removable connection, which is disconnected when an operator removes the tank 5 for emptying, and which is to be connected once again when the tank 5 is put back in place after emptying. The control board is programmed to detect any disconnection of the probes, should the operator forget to connect the probes or to report any failure in connecting the probes.

The level sensor means 10, 10a, 10b, 10c may comprise float sensors, rod sensors, ultrasound sensors, capacitive sensors, etc.

Sensors may be employed, each of them measuring one single liquid level, such as sensors 10a, 10b, 10c: thereby, the number of liquid levels detected, and thus the number of sensors, may be optimized based upon the best compromise between complexity, costs and flexibility of use.

Alternatively, it is possible to use one single sensor 10 providing a continuous measure of the level. This will result in obtaining the maximum information contents and flexibility of use of the cooking apparatus 1 according to the invention.

In a preferred embodiment of the invention, the sensors 10, 10a, 10b, 10c are rod sensors, which are used because they are cheap, reliable and strong even under heavy-duty conditions.

Furthermore, the oven 2 is provided with a control panel 16 which may be provided with a display 17 upon which are displayed information concerning cooking and washing procedures of the oven, as well as data on the working parameters of the oven, and any operator messages and alerts. The display 17 may be a touch screen, by means of which an operator may either select the procedure to be carried out or enter commands or data.

In the prior art oven waste liquid collection systems, described above, it is provided to monitor only the reaching of a maximum level of liquid inside the collecting tank. In one case (DE102010017177), this condition results in the closing of a valve and in the blocking of the oven at the end of the ongoing process, whereas in another case (WO2013/190368), this condition does not result in any change in the conditions of use of the oven. In both these cases, the safe operation of the oven is not 100% guaranteed.

The innovative feature of the invention is the detection of a plurality of levels, at least two, of the liquid inside the collecting tank 5 or, alternatively, a continuous detection of the liquid level.

This information is then sent to the command and control device of the oven, and integrated with the functioning logics of the oven, so as to guarantee a safe operation under all conditions, while optimizing the use of the system by taking full advantage of the collecting tank 5 capacity, and reducing its emptying frequency.

Since no intermediate collecting tank is provided between the oven 2 and the collecting tank 5, during the collecting tank 5 emptying operations the oven 2 shall remain out of order. Yet, thanks to the monitoring of the plurality of liquid levels in the collecting tank 5, an oven 2 operator may be preventively warned about the fill level of the collecting tank 5 and about the expectable residual working capacity, such that he or she may appropriately schedule any collecting tank 5 emptying operations.

One of the liquid levels detected is always a maximum preset level of the liquid in the collecting tank 5, which is not to be exceeded in order to guarantee a safe operation of the oven and avoid any liquid spillage inside the support frame 4 or on a surface, such as a floor, on which the support frame 4 lies. Thus, when the aforesaid maximum liquid level in the collecting tank 5 is reached, the functioning of the oven shall be stopped immediately.

Based on these premises, below is a detailed description of how the monitoring of a plurality of levels inside the collecting tank 5 allows to optimize the use of the oven and to take full advantage of the tank capacity, thanks to appropriate control logics.

It is known that the flow rate of liquid flowing out of the oven 2 drain strongly depends on the type of cooking implemented, e.g., dry cooking or steam cooking, and, as an indication, it may vary from less than 1 l/h to values of the order of 10-12 l/h. Moreover, the automatic cleaning cycle of the oven results in the discharge of an even higher amount of liquid, which also varies depending on the washing cycle used, e.g., more or less intensive, and which may reach values of the order of some tens of liters, e.g., from about 301 to about 501.

Assume, by way of example, that the maximum level provided for the tank corresponds to a maximum capacity of 100 l, and that the more intensive washing cycle results in the discharge of 401 of liquid. When the level in the tank reaches and exceeds 601, this washing cycle shall not be started so as to not exceed the maximum capacity of the tank. Thus, monitoring the 60 1 level will allow to inhibit the start of the washing program, once this level is reached and exceeded.

Assume, again by way of example, that the less intensive washing cycle results in the discharge of 25 l of liquid. In such a case, 75 l will be the critical level to be monitored, beyond which not even this washing cycle will be allowed to start. By contrast, when the level ranges between 60 and 75 l, only the less intensive washing program will be allowed.

Moreover, once the 75-1 threshold is exceeded, it will still be possible to use the oven for cooking, until the maximum level is reached. Thereby, though the user cannot wash the oven, he or she can still use the oven for cooking.

Furthermore, knowing the flow rate of liquid discharged from the oven 2 in the various cooking methods, prior to the beginning of the cooking cycle one may foresee a maximum duration of the cooking time, depending on the liquid level reached inside the collecting tank 5. In this way, the display 17 of the control panel 16 may warn the operator before the cooking starts, and inform him or her, for example, that a too long cooking process may be interrupted prematurely due to the reaching of the maximum liquid level in the collecting tank 5.

Again with reference to the example above, assume that the maximum flow rate of liquid at the drain 9 of the oven be 10 l/h.

One may decide, for example, to monitor the 90-1 level, which corresponds, at worst, to a residual working range of 1h. Upon reaching this threshold, a timer may be activated that calculates the residual cooking time left, starting from 1 h, and displays it to an operator in the display 17 of the control board 16.

One may also decide to not allow the activation of new cooking processes lasting more longer than the residual cooking time left, in order to avoid their interruption when the maximum liquid level in the collecting tank 5 is reached.

Knowing the flow rate of liquid at the drain based on the cooking parameters, the described logic may be improved by adjusting the calculation of the residual time on the actual conditions of use of the oven.

Obviously, the higher the number of liquid levels monitored in the collecting tank 5, the more information can be processed and used by the command and control device of the oven 2 in order to optimize an operator's use of the system.

It is worth noting that the use of a plurality of sensors, each of them measures one single level, does not necessarily result in a less reliable system. Indeed, in case of breakdown of one of the intermediate sensors, the flexibility of use of the apparatus is reduced, but the oven can still be used, though with some limitations (e.g., only for cooking processes).

An additional condition to be monitored for the purposes of guaranteeing a safe operation of the apparatus 1 according to the invention is the correct positioning of the collecting tank 5. This can be guaranteed either by a position sensor of a known type (a mechanical, magnetic, etc., micro-switch) or, if the use of sensors is to be avoided, by a mechanical fixing system that may be actuated only when the tank is in place.

For example, the support frame 4 of the oven 2 may be provided with a movable blocking lever located on the front part and designed to be actuated only if the tank has been properly located in its seat within the support frame 4.

The collecting tank 5 is configured for taking full advantage of the volume available within the support frame 4, which has the same plan dimensions as the oven 2 itself, in order to extend as much as possible, the working time of the tank between an emptying event and a subsequent emptying event. In the Example shown in the Figure, inside the support frame 4 also the canisters 14 containing the detergent products for the automatic cleaning system of the oven were arranged.

## Claims

1. Apparatus (1) for cooking food comprising an oven (2), comprising a cooking chamber in which the food can be cooked by dry hot air, steam or hot air and steam together, a support frame (4) to which said oven (2) is fixed, a collecting tank (5) designed to collect the liquid produced in said cooking chamber during the cooking of food or delivered to said cooking chamber during a washing procedure of said oven (2), said collecting tank (5) being associated with said support frame (4) and being provided with an inlet opening (8) that can be connected to a drain (9) of said cooking chamber, wherein said collecting tank (5) is provided with level sensor means (10; 10a, 10b, 10c) configured for detecting a plurality of levels reached by said liquid in said collecting tank (5), wherein said inlet opening (8) is connected to said discharge (9) by a pipe (7) provided with a connecting element (7a) configured for being inserted into said inlet opening (8), **characterized in that** said inlet opening (8) is provided with a normally closed check valve (8a), that can be opened by said connecting element (7a) when the latter is inserted into said inlet opening (8).

2. Apparatus (1) according to claim 1, wherein said level sensor means comprise at least one first level sensor (10a) configured for detecting a first level reached by said liquid in said collecting tank (5) and a second level sensor (10b) configured for detecting a second level reached by said liquid in said collecting tank (5), said second level being greater than said first level.

3. Apparatus (1) according to claim 2, wherein said collecting tank (5) is provided with at least one third level sensor (10c) configured for detecting a third level reached by said liquid in said collecting tank (5) said third level being greater than said second level.

4. Apparatus (1) according to claim 1, wherein said level sensor means comprise a single level sensor (10) configured for detecting continuously the level of liquid in said collecting tank (5).

5. Apparatus (1) according to any of the preceding claims, wherein said level sensor means (10; 10a, 10b, 10c) are operationally connected to a command and control device of the oven (2).

6. Apparatus (1) according to any of the preceding claims, wherein said inlet opening (8) is provided with a seal gasket configured for making a substantially hermetic seal between said connecting element (7a) and said inlet opening (8), when said connecting element (7a) is inserted into said inlet opening.

7. Apparatus (1) according to any of the preceding claims, wherein said collecting tank (5) is provided with a discharge conduit (13) provided with a manually driven opening and closing valve (19).

8. Method for managing an apparatus (1) for cooking food, said apparatus (1) comprising an oven (2) for cooking said foods, fixed to a support frame (4) with which a collecting tank (5) is associated that is designed to collect the liquid produced in said oven (2) during the cooking of food or delivered to said oven (2) during a washing procedure of said oven (2), said method comprising detecting a plurality of different levels reached by said liquid in said collecting tank (5) and communicating the reaching of said levels to a command and control device of the oven (2), one of said levels being a preset permissible maximum level that said liquid can reach in said collecting tank (5), **characterized in that** a first level of said plurality of levels, below said preset permissible maximum level, corresponds to a level of liquid that does not have to be exceeded for a first free volume to remain inside the collecting tank (5) that is available to receive a first quantity of washing liquid used in a first washing procedure of the oven (2).

9. Method according to claim 8, wherein said detecting comprises detecting continuously the level reached by said liquid inside said collecting tank.

10. Method according to claim 8, further comprising commanding the arrest of the oven by said command and control device when the level of liquid in the collecting tank (5) reaches said preset permissible maximum level.

11. Method according to claim 8, wherein a second level of said plurality of levels, below said preset permissible maximum level and greater than said first level, corresponds to a level of liquid that does not have to be exceeded for a second free volume to remain inside the collecting tank (5) that is available to receive a second quantity of washing liquid used in a second washing procedure of the oven (2).

12. Method according to claim 11, further comprising inhibiting the carrying out of said first washing procedure if the level of liquid in the collecting tank (5) exceeds said first level and inhibiting the carrying out of said second washing procedure, as well, if the level of liquid in the collecting tank (5) exceeds said second level.

13. Method according to claim 8, further comprising calculating, for each of said levels of liquid, the residual working range of the oven (2), said residual working time depending on the residual free volume in the collecting tank (5) at each of said liquid levels and on the amount of liquid discharged from the oven (2) during a cooking procedure.

14. Method according to claim 13, further comprising communicating visually or acoustically to an oven (2) operator the residual working range of the oven (2).

15. Method according to claim 14, further comprising inhibiting the startup of a cooking procedure if said cooking procedure has a duration that is greater than said residual working range.
